# FASCICULE DE BREVET EUROPEEN

(11) **EP 0 665 275 B1**
(45) Date de publication et mention de la délivrance du brevet: **19.12.2001**
(21) Numéro de dépôt: 95870006.4
(22) Date de dépôt: 20.01.1995
(51) Int. Cl.: C09D 4/00, C09D 5/44, H01B 1/12, C25D 13/08

(54) **Procédé de dépôt par électropolymérisation d'un film organique sur une surface conductrice de l'électricité**
Verfahren zum Aufbringen eines organischen Films auf eine leitfähige Oberfläche durch Elektropolymerisation
Process for depositing an organic film on an electroconductive surface by electropolymerisation

(30) Priorité: 20.01.1994 BE 9400067
(43) Date de publication de la demande: 02.08.1995
(73) Titulaire: RECHERCHE ET DEVELOPPEMENT DU GROUPE COCKERILL SAMBRE, en abrégé: RD-CS, 4000 Liège (BE)
(72) Inventeur: Mertens, Marc, B-4900 Spa (BE); Calberg, Cedric, B-4000 Liège (BE); Martinot, Lucien, B-4877 Olne (BE); Jerome, Robert, B-4130 Tilff (BE); Schrijnemackers, Jean, B-4053 Embourg (BE)
(74) Mandataire: Callewaert, Jean

(56) Documents cités:
- EP-A- 0 038 244
- EP-A- 0 323 351
- EP-A- 0 618 276
- DATABASE WPI Week 8632, Derwent Publications Ltd., London, GB; AN 86-209496 & JP-A-61 143 193 (CANON) 30 Juin 1986

## Description

La présente invention est relative à un procédé de dépôt par électropolymérisation d'un film organique sur une surface conductrice de l'électricité suivant lequel on fait usage d'un mélange comprenant (a) au moins un monomère pouvant former un polymère sur cette surface, (b) au moins une matière pouvant s'associer audit polymère, (c) un électrolyte support et (d) un solvant, sauf lorsque la combinaison monomère (a) molécule à insérer (b) constitue le solvant, ce mélange étant soumis à une électrolyse en utilisant comme cathode la surface conductrice à revêtir à un potentiel situé dans la zone correspondant au transfert électronique entre la surface conductrice et le monomère d'une valeur égale, proche ou plus négative que celle correspondant au pic d'inhibition de la réaction cathodique du monomère, mais moins négative que la réaction du solvant ou de l'électrolyte support.

La réalisation de surfaces métalliques revêtues de film organique présente un grand intérêt dans de nombreux domaines, en particulier pour la fabrication de prothèses ou dans le cadre de la protection anticorrosion. Ce type d'application nécessite la synthèse d'un matériau composite stable, dont l'interface métal-polymère est suffisamment résistante que pour répondre à des sollicitations multiples. En métallurgie, par exemple, les procédés actuels de protection et d'activation des surfaces qui recourent, par voie électrochimique ou non, à la déposition de Co ou de Cr ne répondront plus à moyen terme aux exigences des législations futures en ce qui concerne le taux de pollution des effluents.

Dans certains domaines d'application particulière, à très haute valeur ajoutée, l'obtention d'objets bidimensionnels comme les couches minces, dont les propriétés sont exaltées par rapport à celles des composés massifs synthétisés traditionnellement, est l'objet de nombreuses recherches. A l'image des couches minces organiques, l'organisation des chaînes polymères permet le développement d'effets coopératifs entre les propriétés individuelles des motifs qui les construisent. Les propriétés structurelles qui découlent de cette organisation, à savoir : ordre et interactivité entre les motifs moléculaires, orientation et configuration des chaînes polymères peuvent être mises à profit.

La modification de surfaces métalliques, ou de toute autre surface conductrice de l'électricité, par recouvrement d'une couche mince organique est intéressante dans bien des domaines d'applications, tels que l'optoélectronique, la micromécanique, l'électronique et les biotechnologies. Ici aussi, l'ordre structural est un impératif si l'on veut obtenir des matériaux de haute qualité.

Mais, quelle que soit l'utilisation du matériau, la réalisation d'une interface métal-polymère stable est une nécessité. L'effervescence qui règne dans ce domaine de recherches, aussi bien dans le monde scientifique qu'industriel traduit l'urgence d'une solution convaincante et généralisable.

Diverses approches ont été proposées pour déposer sur des surfaces métalliques un film organique présentant des propriétés satisfaisantes notamment en ce qui concerne l'adhérence, la porosité et l'homogénéité. Dans le passé, l'utilisation d'un intermédiaire sililé a résolu partiellement le problème, sans que cette solution ne trouve toutefois de répercussion particulière dans le monde industriel. Plus récemment, il a été proposé la formation de liaisons entre les atomes d'un métal et des hétéroatomes d'une molécule organique afin d'assurer l'adhésion d'un film de ces molécules sur la surface métallique préalablement activée.

Parallèlement à ces recherches, de nombreux travaux ont étudiés les possibilités offertes par la voie électrochimique. Ils ont montré que si les monomères capables de polymériser par transfert électronique à la cathode sont nombreux, le nombre de ceux permettant la réalisation d'un film adhérant à la surface à revêtir est beaucoup plus restreint. Ainsi il semble que seuls l'acrylonitrile, la méthacrylonitrile et le parachlorostyrène présentent les caractéristiques souhaitées. Dans la demande de brevet EP-A-0038244, la formation de film de polyacrylonitrile sur une électrode au départ d'un bain contenant un électrolyte support, un solvant et de l'acrylonitrile est illustrée. Récemment, il a été démontré que les chaînes de polyacrylonitrile, au contact immédiat de l'électrode possèdent une certaine orientation et une tacticité, due à une interaction entre le dipôle du monomère et le champ électrique. Cette organisation disparaît rapidement avec la croissance du film.

Il est également connu d'ajouter au mélange précité, comme matière pouvant s'associer au polymère, un agent dopant (EP-A-0618276). Selon ce dernier procédé, l'agent dopant est une substance présentant un potentiel de transfert électronique qui est situé dans la zone correspondant au transfert électronique entre le monomère et l'électrode, mais moins négatif que le potentiel de réaction cathodique du solvant ou de l'électrolyte-support. Dans ce cas, l'introduction de l'agent dopant dans le film se fait via une réaction électrochimique, pouvant perturber la réduction du monomère sur la surface conductrice de l'électricité au risque de diminuer notablement le taux de recouvrement du polymère et l'adhésion de celui-ci sur la surface à revêtir. De plus, l'incorporation de l'agent dopant se réalise préférentiellement à proximité immédiate de l'électrode, elle n'a donc pratiquement aucun effet sur les propriétés de surface du film. Un taux d'incorporation trop élevé est une cause de fragilisation du film, en raison des interactions physiques, énergétiquement faibles, qui unissent dopant et polymère dans le film composite.

Actuellement, il n'est toujours pas possible, par exemple, de déposer un film à caractère biocompatible, condition sine qua non pour l'utilisation d'un tel film comme revêtement de prothèses ou de couvrir une surface métallique par une couche organique porteuse d'une fonctionnalité recherchée dans le domaine des peintures ou des vernis, à savoir : amine, acide, ester ou époxyde par exemple pour assurer par liaison chimique une adhérence forte entre le film polymère et la couche de finition.

Un des buts de la présente invention est de proposer un procédé qui permet de dépasser les limites actuelles très étroites des procédés électrochimiques en formant par électropolymérisation des films organiques minces présentant des propriétés très satisfaisantes en termes de taux de recouvrement de la surface, d'homogénéité et d'adhérence du film et dont les propriétés mécaniques, structurales et de surface sont ajustables dans de très larges limites en fonction des besoins de l'utilisateur. Ainsi, suivant l'invention on utilise, comme matière à associer au polymère, une substance réactive capable de réagir chimiquement avec des chaînes polymères en croissances formées à partir du monomère.

Il s'agit plus particulièrement d'une substance réactive comprenant une ou plusieurs molécules capable(s) de s'insérer chimiquement dans les chaînes polymères en croissance formées à partir du monomère précité.

Avantageusement, cette molécule est constituée par un comonomère pouvant copolymériser avec le monomère précité.

En s'intégrant par copolymérisation dans les chaînes formées à partir du monomère, et sans inhiber le mécanisme de propagation, le comonomère peut en modifier les propriétés d'une façon plus ou moins considérable selon le taux d'incorporation, lui-même dépendant notamment des concentrations respectives du monomère et du comonomère qui peuvent donc être choisies en fonction du résultat désiré.

Par ailleurs, dans une autre forme de réalisation de l'invention, la substance précitée est constituée d'un agent de terminaison qui est capable de stopper le processus de propagation de la polymérisation. Dans ce cas, en arrêtant donc le processus de propagation, on peut limiter les dépôts formant le film en cause à de faibles épaisseurs, tout en augmentant la densité de chaînes amorcées par électropolymérisation. Plus la concentration de l'agent de terminaison est élevée, plus courtes et plus nombreuses sont les chaînes polymères dans le film. Par l'utilisation d'un agent de terminaison on peut ainsi accroître le taux de recouvrement de la surface conductrice, à savoir la cathode, sur laquelle le film doit être formé. A priori, une densité accrue de chaînes amorcées signifie également une meilleure organisation spatiale de celle-ci. De plus un choix judicieux de l'agent de terminaison permet d'introduire, suivant l'invention, une fonctionnalité particulière et recherchée à la surface du film électrodéposé.

De ce qui précède il résulte donc que l'invention concerne la formation de tout type de film organique déposé par électropolymérisation cathodique sur une surface conductrice d'électricité dont la plupart des chaînes polymères se présentent sous forme d'une succession de longueur variable de motifs monomère terminés par un motif différent dans le cas où la substance réactive est un agent de terminaison. Si la substance réactive introduite dans le mélange à soumettre à une électropolymérisation contient un comonomère, les films organiques déposés par électropolymérisation cathodique sont, dans la plupart des cas, constitués de chaînes polymères contenant une succession quelconque de deux motifs : le monomère et le comonomère. Ainsi, le cas extrême est la formation d'un film dont la plupart des chaînes se présentent sous forme d'une succession plus ou moins grande de motifs comonomère mais dont l'extrémité la plus proche de la surface à recouvrir est constituée par un motif monomère.

Dans certains cas, il est possible, suivant l'invention, de faire usage d'une substance réactive comprenant aussi bien un comonomère et un agent de terminaison, dont le rapport peut varier dans de larges limites en fonction du but visé.

Par ailleurs, en plus du comonomère et/ou de l'agent de terminaison précité, le mélange destiné à être soumis à l'électrolyse peut avantageusement contenir une ou plusieurs autres matières électrochimiquement inertes ou actives, formant par exemple des agents dopants.

Les agents dopants électrochimiquement réactionnels peuvent se présenter sous forme de composés inorganiques ou organiques solubles, ou encore sous forme de complexe. Comme composés inorganiques, on peut citer : TiCl₄, CuBr₂, Fe(Ac)₂, NiBr₂(PΦ₃)₂, AgNO₃, AlCl₃, FeCl₃, MoCl₃, MoCl₅, MnBr₂, CrCl₃, WCl₆, VCl₃, MgCl₂, PbCl₂, MoBr₃, MoBr₄, TiCl₃, Cs₂UCl₆, Cs₂UO₂Cl₄, Cs₂NpCl₆, Cs₂PuCl₆. Comme composés organiques, on peut citer des amides et des quinones et comme composés complexes, le ferrocène et des métaux carbonyles. Il est important de noter que les agents dopants électrochimiquement réactionnels précités ne peuvent pas être confondus avec les agents dopants fréquemment utilisés dans le vaste domaine des polymères conducteurs où les agents dopants consistent en des contre-ions du polymère indispensables pour assurer l'électroneutralité du dépôt sous sa forme conductrice.

Les agents dopants électrochimiquement inertes, ou considérés comme tels car ne réagissant pas dans la plage de potentiels cathodiques revendiquée, peuvent se présenter sous forme de composés organiques ou inorganiques. Comme composés inorganiques, on peut citer : des oxydes comme TiO₂, MgO, Al₂O₃, SiO₂, Fe₂O₃; des sels insolubles comme CaCO₃, MgCO₃, Ca(NO₃)₂, NaCl, PbSO₄, CaSO₄, FeSO₄... Comme composés organiques, on peut citer des oligomères ou des polymères ne contenant aucun groupement fonctionnel réductible de type alcool, acide, quinone.

Par ailleurs, suivant l'invention, le solvant utilisé peut être soit un composé aprotique, soit une combinaison monomère-molécule à insérer chimiquement dans les chaînes polymères, soit encore une combinaison des trois. En principe, il suffit que le solvant ne donne de réaction parasite ni avec le monomère, ni avec ladite molécule.

Plus particulièrement, le procédé suivant l'invention, lorsqu'il vise la réalisation d'un film composite sur des métaux usuels susceptibles de subir un phénomène de dissolution anodique en milieu organique, est généralement mieux adapté à la réalisation de films polymères en régime cathodique. C'est ainsi que, suivant l'invention, l'on utilise de préférence un monomère précurseur d'un polymère non conducteur.

A titre de solvant aprotique, on peut citer notamment l'hexaméthylphosphorotriamide, le diméthylsulfoxyde, la diméthylformamide, l'acétronitrile et/ou le chlorure de méthylène.

Pour ce qui concerne l'électrolyte, celui-ci doit être soluble dans le solvant choisi et sa concentration doit être suffisante pour obtenir une conductivité suffisamment importante dans une cellule d'électrolyse où est introduit le mélange précité pour effectuer le dépôt par électropolymérisation. Ainsi, il s'est avéré que cette conductivité peut généralement être égale ou supérieure à 10⁻⁴Ω⁻¹cm⁻¹. De bons résultats ont été obtenus avec une concentration située entre 10⁻³ et 5M, alors qu'une préférence est donnée à des concentrations comprises entre 5.10⁻²M et 5.10⁻¹M. Plus particulièrement, suivant l'invention, l'électrolyte-support peut comprendre un perchlorate, un tosylate, un tétrafluoroborate, un hexafluorophosphate, et/ou un halogénure d'ammonium quaternaire de formule : 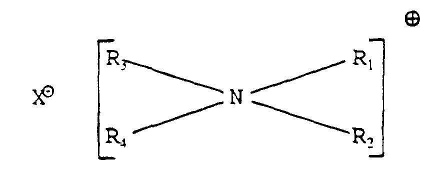 dans laquelle X⁻ représente ClO₄⁻, BF₄⁻, PF₆⁻, OTos⁻, Cl⁻, Br⁻ et dans laquelle les radicaux R₁, R₂, R₃ et R₄, qui sont identiques ou différents, sont des hydrogènes, des radicaux alkyles de C₁ à C₆ ou aryles.

En ce qui concerne le monomère, sa concentration dans le bain d'électrolyse doit être suffisante pour obtenir l'homogénéité et l'adhésion requise. Cette concentration est généralement maintenue entre 10⁻³ et 10M. Une préférence est donnée pour une concentration du monomère comprise entre 5.10⁻² M et 2 M sauf dans le cas où le monomère constitue le solvant en combinaison avec la molécule à insérer chimiquement dans les chaînes polymères. Ce monomère peut par exemple être du type insaturé ou cyclique. Plus particulièrement, il peut présenter un pic d'inhibition sur un voltampérogramme réalisé à faible vitesse de balayage des potentiels, par exemple 5 mV par seconde. Plus spécifiquement, le monomère peut être constitué d'acrylonitrile, d'acroléine et/ou d'acrylamide.

Le choix de la nature de la substance réactive à insérer dans ou à fixer sur les chaînes polymères en croissance par réaction chimique dépend principalement du mécanisme de propagation de celles-ci, mais aussi des propriétés que l'on désire apporter au film. Le DPPH (2,2-diphényl-1-picrylhydrazyl), les dérivés halogénés et les mercaptans sont des exemples d'agent de terminaison d'une propagation radicalaire. En ce qui concerne le comonomère, le procédé suivant l'invention nécessite qu'il soit polymérisé par le même type d'espèce active que le monomère, par exemple radicalaire. Le comonomère peut être un monomère vinylique et, de préférence un acrylate, et/ou un méthacrylate.

Avantageusement, on veillera à éviter l'usage d'un agent de terminaison ou d'un comonomère se réduisant à un potentiel moins négatif que celui du pic d'inhibition du monomère. Par contre, si cette entité chimique est susceptible de réagir à l'anode, le dispositif d'électropolymérisation comprendra de préférence une plaque de verre fritté pour assurer la séparation entre les compartiments anodiques et cathodiques afin d'améliorer la pureté des films obtenus.

La concentration maximale de la substance réactive précitée dans le mélange à soumettre à une électropolymérisation, est fixée par sa limite de solubilité dans le bain d'électrolyse. Plus concrètement, si cette substance est un agent de terminaison, sa concentration est généralement inférieure à celle du monomère, sauf si l'on désire des films extrêmement minces, par exemple quelques dizaines d'Å, ou des films dont le taux de fonctionnalisation de la surface est élevé. Une préférence est donnée à des concentrations situées entre 10⁻⁶ et 10⁻¹ M. Si cette substance est un comonomère, sa concentration est généralement équivalente ou supérieure à celle du monomère. Une préférence est donnée à des concentrations situées entre 5.10⁻³ et 5 M, sauf si le solvant est une combinaison monomère-comonomère.

Comme déjà indiqué ci-dessus, la nature de la substance réactive peut être très variée. On distingue trois types d'agents de terminaison si le mécanisme de propagation est radicalaire : (a) Les agents de terminaison qui réagissent par couplage et qui sont formés de radicaux stabilisés tel le DPPH; (b) ceux qui réagissent par transfert, comme les mercaptans ou les dérivés halogénés; et enfin (c) les monomères captodatifs, qui après réaction avec l'espèce active sont incapables de poursuivre la polymérisation par suite de l'apparition d'un radical trop stabilisé. Dans cette dernière catégorie, on peut citer comme exemple les monomères de formule générale 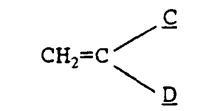 dans laquelle C est un groupement électroattracteur, comme par exemple -C≡N, -CO-R, -CO-OR et D un groupement électrodonneur, comme par exemple -OR, -NR₂, -SR, -O-CO-R, -O-SiR₃, -O-PO-(OR)₃.

Comme radical stabilisé, on peut citer en outre le 1,3-bis-diphenylène-2-phenylallyl ou le 2,2-di(4-tert-octylphenyl)-1-picrylhydrazyl.

Comme agent de terminaison réagissant par transfert, on peut utiliser par exemple :
- les polyhalométhanes de formule CHₐX_{b}Y_{c} où X et Y représentent Cl⁻, Br⁻, F⁻ ou I⁻ et dans laquelle a varie de 0 à 2 et b et c de 0 à 4
- les disulfures de formule (R-S)₂ comme (C₂H₅-S)₂, (C₆H₅-CH₂-S)₂, (C₆H₅-CO-S)₂...
- l'azobisisobutyronitrile (AIBN) ou un des ses dérivés de formule 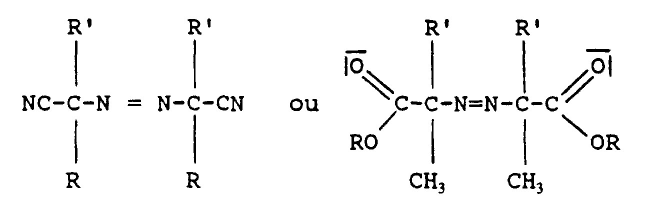 dans laquelle R et R', qui sont identiques ou différents, sont des chaînes hydrocarbonées de C₁ à C₆.
- un peroxyde de type 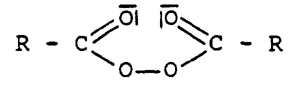
- un mercaptan, comme par exemple CH₃-CH₂-CH₂-SH, CH₃-COCH₂-SH, CH₃-O-CO-CH₂-CH₂-SH

Comme déjà indiqué ci-dessus, la nature du comonomère peut être elle aussi très variée. On peut citer à titre d'exemples non limitatifs : les oléfines, les halogénures de vinyle (par ex. CH₂=CHCl), les halogénures de vinylidène (par ex. CH₂=CBr₂, CH₂=CCl₂) les acrylates, les méthacrylates, les esters de vinyle, les éthers de vinyle, les vinyles aromatiques, les diènes conjugués, les lactones.

La sélection finale tient compte à la fois des propriétés mécaniques et de la fonctionnalité requises. Quelques applications sont reprises ci-dessous.
- La résistance aux acides et bases minéraux peut être améliorée par l'incorporation de monomères fluorés, par exemple le tétrafluoroéthylène CF₂=CF₂, le fluoroéthylpropylène, un vinyléther perfluoré ou un (méth)acrylate fluoré.
- La copolymérisation d'allylméthacrylate (CH₂=C(CH₃)-COOCH₂-CH=CH₂) en vue de la formation d'un film réticulable par simple irradiation UV.
- La copolymérisation de glycidylméthacrylate 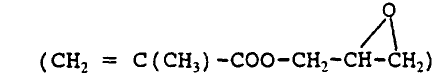 en vue de la formation de films porteurs de groupements réactifs époxydes.
- La copolymérisation d'un monomère peu polaire, comme le butadiène ou d'un acrylate de n-alkyle, pour améliorer la résistance à l'impact des films.
- La copolymérisation d'une forme masquée de l'hydroxyéthylméthacrylate pour accroître la biocompatibilité des films.

Suivant une forme de réalisation particulière de l'invention, on fait usage d'un comonomère qui présente lui aussi un pic d'inhibition sur un voltampérogramme réalisé à basse vitesse de balayage des potentiels.

Comme déjà signalé ci-dessus, en fonction de la nature du bain d'électrolyse, il est possible d'utiliser comme cathode la surface conductrice de l'électricité. Cette surface peut être, par exemple, métallique ou formée de graphite ou encore une électrode ITO.

Selon l'invention, l'électrolyse est réalisée en polarisant la cathode à un potentiel situé dans la zone correspondant au transfert électronique entre l'électrode considérée et le monomère, mais moins négatif que celui de la réaction du solvant ou de l'électrolyte support, éventuellement moins négatif que celui de la molécule à insérer chimiquement, pour limiter l'action dégradante de ces réactions sur l'homogénéité de la couche polymère. La valeur du potentiel d'électrolyse dépend évidemment de la nature du solvant, du monomère, de la molécule à insérer et de leur concentration respective. Cette valeur est déterminée après analyse des courbes électrochimiques obtenues par voltampérométrie. En pratique, la plage de potentiels compatibles avec le procédé suivant l'invention comprend tous les potentiels compris entre le début du pic d'inhibition et la fin de la zone de passivation qui s'ensuit. Les potentiels auxquels monomère et molécule à insérer chimiquement subissent une réduction concomitante sont éliminés de préférence de la zone sélectionnée.

Dans le cas particulier où monomère et comonomère présentent un pic d'inhibition, la plage de potentiels compatibles avec le procédé s'étend du début du pic d'inhibition le moins cathodique au potentiel correspondant à la réaction du solvant ou de l'électrolyte support.

En réalisant l'électrolyse à partir d'une solution très pure, sous atmosphère contrôlée, on diminue fortement toute possibilité de développement de réactions parasites susceptibles de nuire à l'homogénéité des films.

L'utilisation d'une solution d'électrolyse, dont les teneurs en eau et en oxygène sont maintenues à des valeurs très faibles, permet de réaliser, sur les surfaces à revêtir, des dépôts de films minces organiques présentant des propriétés satisfaisantes en ce qui concerne le taux de recouvrement des surfaces, leur adhérence et leur homogénéité. De préférence, la teneur en eau du bain est inférieure à 10⁻³M. Avant l'électrolyse, le bain d'électrolyse est dégazé par bullage avec un gaz inerte contenant au maximum 5 ppm de H₂O et 10 ppm en O₂.

La figure 1 est une vue schématique en élévation d'une cellule électrochimique permettant la mise en oeuvre du procédé suivant l'invention, dans laquelle les électrodes ont été omises.

La figure 2 est une vue d'en haut de cette même cellule.

La figure 3 est une coupe partielle verticale, à plus grande échelle de deux des électrodes montés dans la cellule suivant les figures précédentes.

La figure 4 est une vue schématique en élévation d'une cellule suivant une variante de celle des figures précédentes.

La figure 5 est une vue d'en haut de cette variante.

La figure 6 représente un voltampérogramme relatif à l'électrolyse avec du styrène deutéré.

Les figures 7 et 8 représentent chacune un voltampérogramme relatif à l'utilisation de DPPH comme agent de terminaison.

Dans les différentes figures, les mêmes chiffres de référence se rapportent aux mêmes éléments.

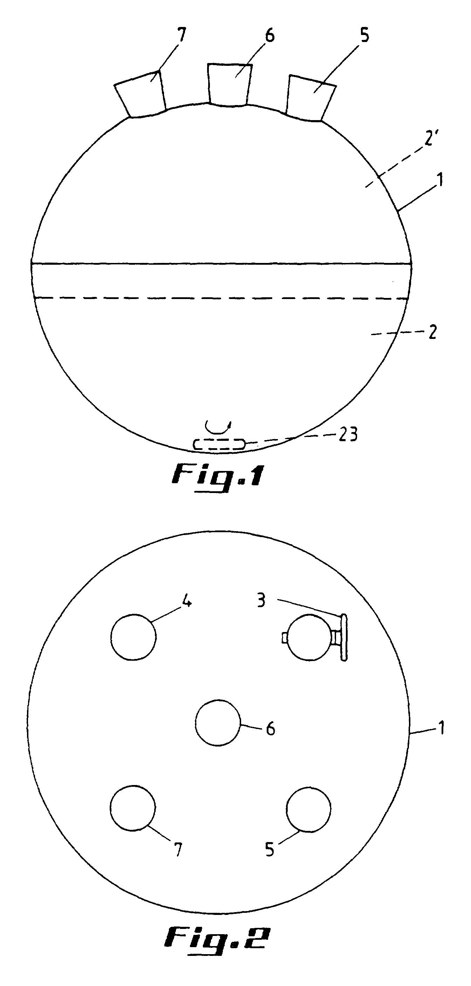

La cellule d'électrolyse telle que représentée aux figures 1 et 2 comprend une enceinte fermée 1 contenant une solution 2 formée du solvant, du monomère, de l'électrolyte-support et de la substance réactive capable de s'insérer par réaction chimique. Dans le fond de cette enceinte 1 est prévu un barreau magnétique 23 tournant autour d'un axe vertical pour assurer ainsi l'homogénéité de la solution 2.

La partie supérieure de cette enceinte présente un robinet 3, permettant de maintenir au-dessus de la solution 2 une atmosphère inerte d'azote 2', et quatre logements coniques rodés intérieurement 4, 5, 6 et 7 dans lesquels sont suspendues des électrodes, notamment une électrode centrale de travail 8, deux contre-électrodes 9 et 10 situées de part et d'autre de l'électrode de travail 8 et une électrode de référence 11.

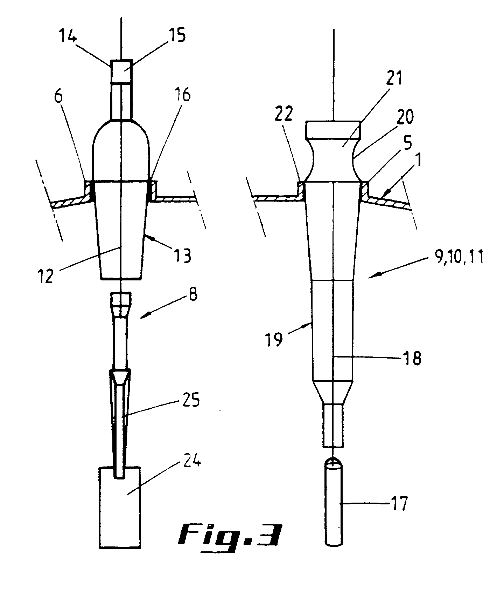

Ces électrodes sont montrées plus en détail à la figure 3. L'électrode de travail 8 comprend à son extrémité libre inférieure une plaque de métal 24 à recouvrir présentant par exemple une largeur de 1 cm et une hauteur de 2 cm. Cette plaque 24 est suspendue par une pince 25 à un conducteur 12 qui s'étend à l'intérieur, dans l'axe, d'un manchon en verre 13, dont l'ouverture supérieure 14 est fermée par un bouchon de colle époxy 15. Le manchon 13 présente une paroi extérieure conique rodée 16 s'adaptant d'une manière sensiblement étanche dans le logement 6 de l'enceinte 1.

L'électrode de référence 11 et les contre-électrodes 9 et 10 sont de la même construction et comprennent une feuille en platine enroulée sous forme de cylindre 17 présentant une surface de l'ordre de 10 cm². Ce cylindre 17 est suspendu à un conducteur 18 s'étendant dans l'axe d'un manchon en verre 19 fermé à son extrémité supérieure 20 par un bouchon de colle époxy 21.

Comme pour l'électrode 8, les électrodes 11, 9 et 10 présentent une paroi extérieure conique 22 s'adaptant d'une manière étanche dans les logements correspondants 7, 4 et 5 de l'enceinte 1.

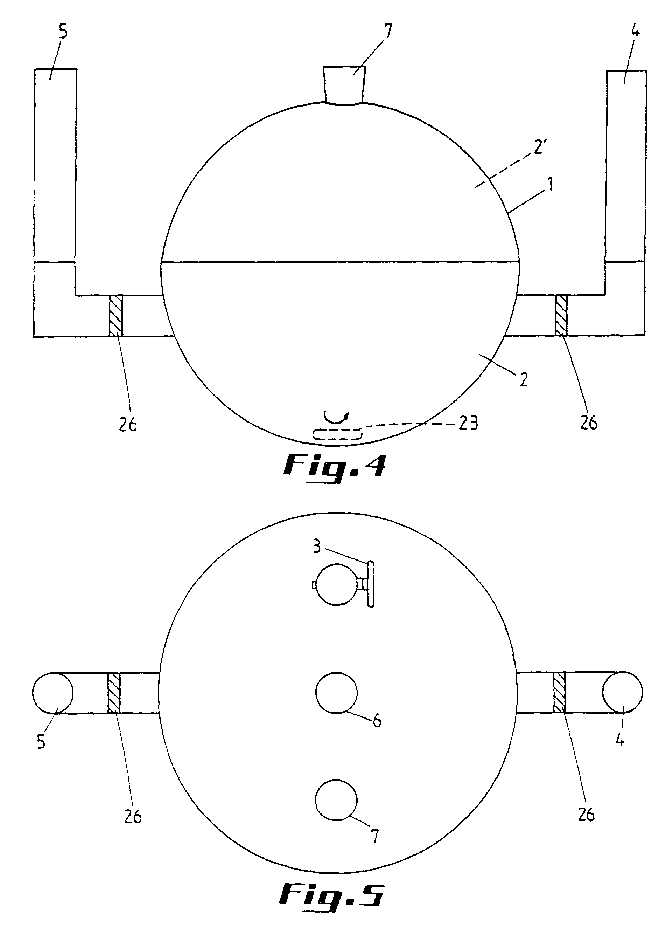

La variante illustrée par les figures 4 et 5 se différencie par rapport à la forme de réalisation montrée aux figures précédentes par le fait que les compartiments anodique et cathodique sont séparés par une plaque de verre fritté 26.

### Exemple 1

Cet exemple démontre l'incorporation de styrène deutéré dans un film d'acrylonitrile. La substance réactive, notamment molécule à insérer, par réaction chimique, dans les chaînes polymères en croissance est ici un comonomère. L'électrode est en nickel et le solvant est constitué d'acétonitrile.

Le bain d'électrolyse a été préparé sur base des constituants suivants :
- 30 ml de CH₃CN (Janssen, P.A.) séché sur hydrure calcique (CaCH₂) pendant 48 heures.
- 0,35 g de Et₄NClO₄ (Fluka, > 99 %) séché sous vide (P = 10⁻²mb) à 80°C pendant 24 heures.
- 0,2 ml de CH₂=CH-C≡N (Aldrich, 99 %) séché sur CaH₂ pendant 48 heures.
- 1,75 g du C₈D₈, séché sur fluorényl lithium.

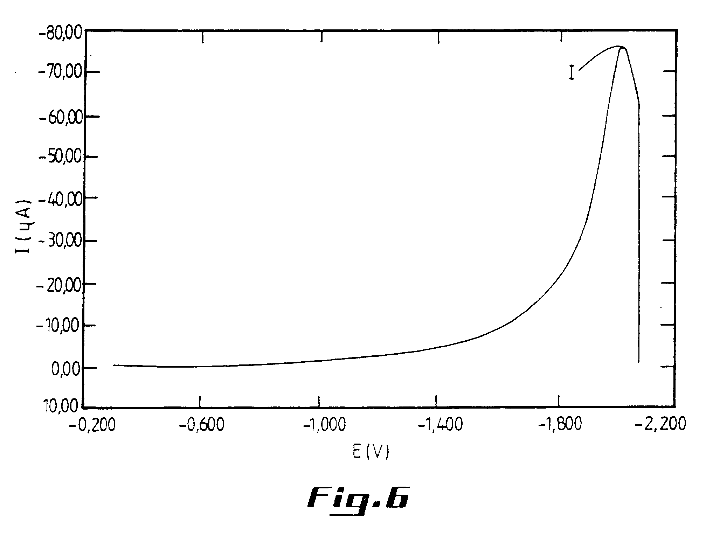

L'échantillon a été obtenu par voltampérométrie cyclique à faible vitesse de balayage (5mV/s) (figure 6). Le potentiel final d'électrolyse est de -2 V par rapport à une pseudoélectrode de platine plongeant dans le bain d'électrolyse. Ce potentiel est légèrement supérieur à celui du sommet du pic d'inhibition de l'acrylonitrile, mais inférieur au premier potentiel de réduction du styrène dans des conditions expérimentales semblables.

L'analyse par spectroscopie de masse d'ions secondaires montre clairement la présence de noyaux deutérés dans le film polymère.

### Exemple 2

Cet exemple concerne l'utilisation de DPPH comme agent de terminaison. Le monomère est ici l'acrylonitrile et le solvant l'acétonitrile.

Les bains d'électrolyse ont été préparés sur base des constituants suivants :
- 150 ml de CH₃CN (Janssen, P.A.) séché sur hydrure calcique (CaH₂) pendant 48 heures.
- 1.9 g de Et₄NClO₄ (Fluka, > 99 %) séché sous vide (P = 10⁻²mb) à 80° pendant 24 heures.
- CH₂=CH-CN (Aldrich, 99 %) séché sur CaH₂ pendant 48 heures.
- 2,2-Di(4-tert-octylphenyl)-1-picrylhydrazyl de formule C₃₄H₄₄N₅O₆ (Janssen, > 98 %) séché sous vide (P = 10⁻² mb) pendant 1 semaine.

| **Résultats** | | | |
|---|---|---|---|
| **Essai** | **[DPPH]** | **[Acrylonitrile** | **Observations (voltampérogramme à 20mV/s)** |
| 1 | 0 | 0,1 M | Intensité du Pic d'Inhibition : 400 µA |
| 2 | 3.10⁻⁵ M | 0,1 M | Intensité du Pic d'Inhibition : 460µA avec décoloration |
| 3 | 0 | 0,3 M | Intensité du Pic d'Inhibition : 68µA |
| 4 | 3.10⁻⁵ M | 0,3 M | Intensité du Pic d'Inhibition : 76µA avec décoloration |
| 5 | 0 | 0,2 M | Intensité du Pic d'Inhibition : 78µA |
| 6 | 3.10⁻⁴ M | 0,2 M | Intensité du Pic d'Inhibition : 410µA |
| 7 | 10⁻³ M | 0,2 M | Intensité du Pic d'Inhibition : 680µA |

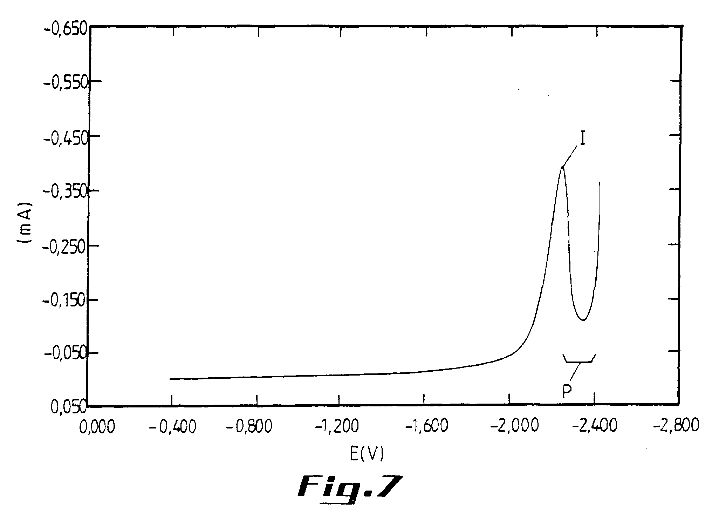

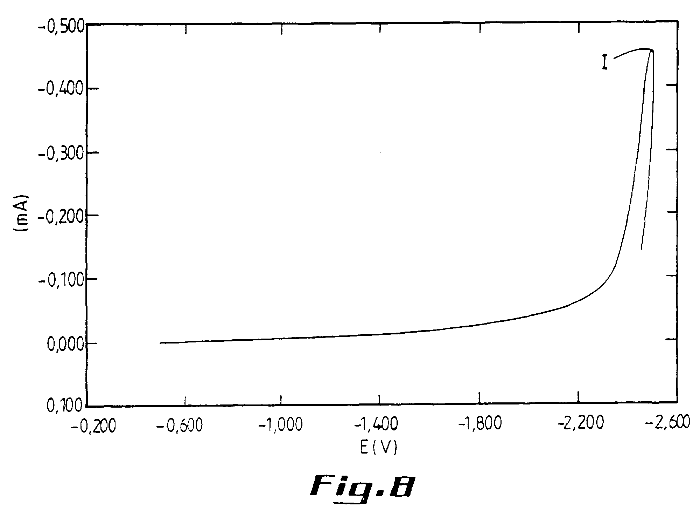

Par rapport à une pseudo référence de platine plongeant dans le bain d'électrolyse exempt de monomère, la décoloration du DPPH n'a pas lieu avant -2,6 V. En présence de monomère, cette décoloration est observée à un potentiel beaucoup plus faible correspondant à celui du pic d'inhibition (essais 2 et 4). Ce qui signifie que le DPPH réagit avec le radical assurant la propagation. Ce fait a été confirmé par des mesures de SIMS, qui certifient la présence de molécules de DPPH à la surface du film et la quasi absence de ceux-ci dans l'épaisseur du film. Les figures 7 et 8 correspondent respectivement aux essais 1 et 2.

On observe ainsi un accroissement important de l'intensité du pic de passivation lorsque l'on élève la concentration en DPPH. Ce fait traduit la diminution de la taille des chaînes de polymères. Dans ce cas, l'effet écran est moindre et la quantité de monomère qui réagit à la cathode est plus grande et avec elle, le taux de recouvrement de la surface de l'électrode. La diminution de la taille des chaînes est perceptible à l'oeil nu.

Dans les figures 5 à 7, le pic d'inhibition a été indiqué par la référence I, tandis que, dans la figure 8, la zone de passivation a été indiquée par la référence P.

## Revendications

1. Procédé de dépôt par électropolymérisation d'un film organique sur une surface conductrice de l'électricité suivant lequel on fait usage d'un mélange comprenant (a) au moins un monomère pouvant former un polymère, de préférence un polymère non conducteur, sur cette surface, (b) au moins une matière pouvant s'associer audit polymère, (c) un électrolyte support et (d) un solvant aprotique optionnel, ce mélange étant soumis à une électrolyse en utilisant comme cathode la surface conductrice à revêtir à un potentiel situé dans la zone correspondant au transfert électronique entre la surface conductrice et le monomère d'une valeur égale, ou plus négative que celle correspondant au pic d'inhibition de la réaction cathodique du monomère, mais moins négative que la réaction du solvant ou de l'électrolyte support, ce procédé étant **caractérisé en ce que** la matière pouvant s'associer au polymère (b) comprend un comonomère et/ou un agent de terminaison capable de réagir chimiquement avec des chaînes polymères en croissance formées à partir du monomère.

2. Procédé suivant la revendication 1, **caractérisé en ce que** l'on utilise comme substance réactive précitée un comonomère pouvant copolymériser avec le monomère sur la surface à revêtir.

3. Procédé suivant la revendication 1 ou 2, **caractérisé en ce que** le monomère utilisé est du type insaturé et/ou cyclique.

4. Procédé suivant l'une quelconque des revendications 1 à 4, **caractérisé en ce que** le monomère utilisé présente un pic d'inhibition sur un voltampérogramme réalisé à faible vitesse de balayage des potentiels compris entre 2 et 10 mV par seconde.

5. Procédé suivant la revendication 3, **caractérisé en ce que** le monomère utilisé comprend de l'acrylonitrile, de l'acroléine et/ou de l'acrylamide.

6. Procédé suivant l'une quelconque des revendications 1 à 5, **caractérisé en ce que** l'on utilise dans le mélange précité un monomère à des concentrations comprises entre 10⁻³ et 10 M.

7. Procédé suivant la revendication 6, **caractérisé en ce que**, dans le cas où le monomère est différent du solvant, la concentration du monomère dans le mélange précité est comprise entre 5.10⁻²M et 2M.

8. Procédé suivant l'une quelconque des revendications 2 à 7, **caractérisé en ce que** le comonomère est un monomère vinylique ou cyclique, tel qu'un halogénure de vinyle ou de vinylidène, un acrylate, un méthacrylate, un ester de vinyle, un éther de vinyle, un vinyle aromatique, un diène conjugué, une lactone.

9. Procédé suivant la revendication 8, **caractérisé en ce que** la concentration du comonomère est située entre 5.10⁻³ et 5M, pour autant que le solvant ne soit pas une combinaison monomère-comonomère.

10. Procédé suivant l'une quelconque des revendications 1 à 9, **caractérisé en ce que** la matière pouvant s'associer audit polymère comprend un agent de terminaison capable de stopper le processus de polymérisation du monomère sur la surface précitée.

11. Procédé suivant la revendication 10, **caractérisé en ce que** l'on utilise un agent de terminaison réagissant soit par couplage, tel que le 2,2-diphényl-1-picrylhydrazyl, soit par transfert, tels que des mercaptans ou des dérivés halogénés, soit par interaction, tels que des monomères captodatifs, qui après réaction avec l'espèce active sont incapables de poursuivre la polymérisation par suite de l'apparition d'un radical trop stabilisé.

12. Procédé suivant la revendication 11, **caractérisé en ce que** l'agent de terminaison réagissant par interaction présente la formule générale : 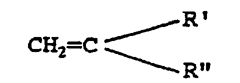 dans laquelle R' est un groupement électroattracteur comme -C≡N, -CO-R, -CO-OR, et R" est un groupement électrodonneur, comme par exemple -OR, -NR₂, -SR, -O -CO -R, -O- Si R₃ et -O-PO-(OR)₃, R étant des radicaux alkyles de C1 à C6 ou aryles.

13. Procédé suivant l'une ou l'autre des revendications 11 et 12, **caractérisé en ce que** le radical stabilisé précité est formé par le 1,3-bis-diphenylène-2-phenylalkyl ou le 2,2-di (4-tert-octylphenyl)-1-picrylhydrazyl.

14. Procédé suivant l'une quelconque des revendications 11 à 13, **caractérisé en ce que** l'on utilise comme agent de terminaison réagissant par transfert :
- les polyhalométhanes de formule CHₐX_{b}Y_{c} où X et Y représentent Cl⁻, Br⁻, F⁻ ou I⁻ et dans laquelle a varie de 0 à 2 et b et c de 0 à 4
- les disulfures de formule (R-S)₂ comme (C₂H₅-S)₂, (C₆H₅-CH₂-S)₂, (C₆H₅-CO-S)₂
- le tétraphényléthylène ou un de ses dérivés substitués comme (CH₃)₃Si-O-C(C₆H₅)₂-C(C₆H₅)₂-O-Si(CH₃)₃
- l'azobisisobutyronitrile (AIBN) ou un de ses dérivés de formule : 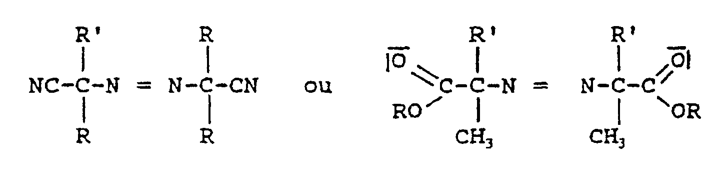 dans laquelle R et R', qui sont identiques ou différents, sont des chaînes hydrocarbonées de C₁ à C₆.
- un peroxyde de type 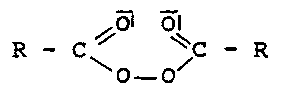
- un mercaptan, comme par exemple CH₃-CH₂-CH₂-SH, CH₃-COCH₂-SH, CH₃-O-CO-CH₂-CH₂-SH

15. Procédé suivant l'une quelconque des revendications 10 à 14, **caractérisé en ce que** l'on utilise un agent de terminaison dont la concentration est comprise entre 10⁻⁶M et 1M.

16. Procédé suivant l'une quelconque des revendications 1 à 15, **caractérisé en ce que** l'on ajoute au mélange précité, comme matière pouvant s'associer audit polymère, un agent dopant s'incorporant dans le film précité lors de la polymérisation.

17. Procédé suivant l'une quelconque des revendications 1 à 16, **caractérisé en ce que** l'on utilise un électrolyte support soluble dans le solvant choisi et présentant une conductivité égale ou supérieure à 10⁻⁵Ω⁻¹cm⁻¹.

18. Procédé suivant l'une quelconque des revendications 1 à 17, **caractérisé en ce qu'**on utilise un électrolyte support dans des concentrations situées entre 10⁻³ et 5M, de préférence entre 5.10⁻²M et 5.10⁻¹M.

19. Procédé suivant l'une quelconque des revendications 1 à 18, **caractérisé en ce que** l'électrolyte-support comprend un perchlorate, un tosylate, un tétrafluoroborate, un hexafluorophosphate, et/ou un halogénure d'ammonium quaternaire de formule : 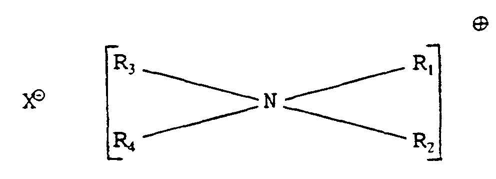 dans laquelle X⁻ représente ClO₄⁻, BF₄⁻, PF₆⁻, OTos⁻, Cl⁻, Br⁻ et dans laquelle les radicaux R₁, R₂, R₃ et R₄, qui sont identiques ou différents, sont des hydrogènes, des radicaux alkyles de C₁ à C₆ ou aryles.

20. Procédé suivant l'une quelconque des revendications 1 à 19, **caractérisé en ce que** l'on utilise à titre de solvant, des solvants aprotiques, organiques, notamment l'hexaméthylphosphorotriamide, le diméthylsulfoxyde, la diméthylformamide, l'acétronitrile et/ou le chlorure de méthylène.

## Patentansprüche

1. Verfahren zur Ablagerung eines organischen Films durch Elektropolymerisation auf einer elektrisch leitenden Oberfläche, gemäß welchem ein Gemisch verwendet wird, das (a) mindestens ein Monomer, das ein Polymer, vorzugsweise ein nicht leitendes Polymer, auf dieser Oberfläche bilden kann, (b) mindestens einen Stoff, der sich mit dem Polymer assoziieren kann, (c) einen Träger-Elektrolyten und (d) ein optionales aprotisches Lösungsmittel umfaßt, wobei dieses Gemisch einer Elektrolyse unterworfen wird, indem als Kathode die zu beschichtende leitende Oberfläche verwendet wird, auf einem Potential, das in dem Bereich liegt, welcher dem Elektronentransfer zwischen der leitenden Oberfläche und dem Monomer eines gleichen Werts entspricht, oder welches negativer ist als dasjenige, das dem Inhibitionspeak der kathodischen Reaktion des Monomers entspricht, aber weniger negativ als die Reaktion des Lösungsmittels oder des Träger-Elektrolyten ist, wobei dieses Verfahren **dadurch gekennzeichnet ist, daß** der Stoff (b), der sich mit dem Polymer assoziieren kann, ein Co-Monomer und/oder ein Beendigungs-Agens, welches dazu in der Lage ist, chemisch mit den aus dem Monomer gebildeten, im Wachstum befindlichen Polymerketten zu reagieren, umfaßt.

2. Verfahren nach Anspruch 1, **dadurch gekennzeichnet, daß** als vorstehend genannte reaktive Substanz ein Co-Monomer verwendet wird, das mit dem Monomer auf der zu beschichtenden Oberfläche copolymerisieren kann.

3. Verfahren nach Anspruch 1 oder 2, **dadurch gekennzeichnet, daß** das verwendete Monomer vom ungesättigten und/oder zyklischen Typ ist.

4. Verfahren nach einem der Ansprüche 1 bis 4, **dadurch gekennzeichnet, daß** das verwendete Monomer einen Inhibitionspeak in einem Voltamperogramm aufweist, welches mit einer geringen Geschwindigkeit der Abtastung der Potentiale, die zwischen 2 und 10 mV pro Sekunde liegt, erstellt wird.

5. Verfahren nach Anspruch 3, **dadurch gekennzeichnet, daß** das verwendete Monomer Acrylnitril, Acrolein und/oder Acrylamid umfaßt.

6. Verfahren nach einem der Ansprüche 1 bis 5, **dadurch gekennzeichnet, daß** in dem vorstehend genannten Gemisch ein Monomer in Konzentrationen, die zwischen 10⁻³ und 10 M liegen, verwendet wird.

7. Verfahren nach Anspruch 6, **dadurch gekennzeichnet, daß**, in dem Fall, in dem das Monomer von dem Lösungsmittel verschieden ist, die Konzentration des Monomers in dem vorstehend genannten Gemisch zwischen 5 • 10⁻² M und 2 M liegt.

8. Verfahren nach einem der Ansprüche 2 bis 7, **dadurch gekennzeichnet, daß** das Co-Monomer ein Vinyl- oder zyklisches Monomer ist, beispielsweise ein Vinyl- oder Vinylidenhalogenid, ein Acrylat, ein Methacrylat, ein Vinylester, ein Vinylether, ein aromatisches Vinyl, ein konjugiertes Dien, ein Lacton.

9. Verfahren nach Anspruch 8, **dadurch gekennzeichnet, daß** die Konzentration des Co-Monomers zwischen 5 • 10⁻³ und 5 M liegt, soweit das Lösungsmittel keine Monomer-Co-Monomer-Kombination ist.

10. Verfahren nach einem der Ansprüche 1 bis 9, **dadurch gekennzeichnet, daß** der Stoff, welcher sich mit dem Polymer verbinden kann, ein Beendigungs-Agens umfaßt, das dazu in der Lage ist, den Vorgang der Polymerisation des Monomers auf der vorstehend genannten Oberfläche zu beenden.

11. Verfahren nach Anspruch 10, **dadurch gekennzeichnet, daß** ein Beendigungs-Agens verwendet wird, das durch Kopplung reagiert, wie beispielsweise 2,2-Diphenyl-1-picrylhydrazyl, oder durch Transfer, wie beispielsweise Mercaptane oder halogenierte Derivate, oder durch Interaktion, wie beispielsweise captodative Monomere, die nach Reaktion mit der aktiven Spezies in Folge des Auftretens eines zu stabilisierten Radikals nicht dazu in der Lage sind, die Polymerisation weiterzuführen.

12. Verfahren nach Anspruch 11, **dadurch gekennzeichnet, daß** das durch Interaktion reagierende Beendigungs-Agens die folgende allgemeine Formel aufweist: 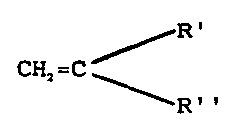 in welcher R' eine elektronenanziehende Gruppe wie -C≡N, -CO-R, -CO-OR, ist und R'' eine elektronenspendende Gruppe, wie beispielsweise -OR, -NR₂, -SR, -O-CO-R, -O-SiR₃ und -O-PO-(OR)₃, ist, wobei R Alkylradikale von C₁ bis C₆ oder Aryle sind.

13. Verfahren nach einem der Ansprüche 11 oder 12, **dadurch gekennzeichnet, daß** das vorstehend genannte stabilisierte Radikal durch 1,3-bis-Diphenylen-2-phenylallyl oder 2,2-Di-(4-tert-oktylphenyl)-1-picrylhydrazyl gebildet ist.

14. Verfahren nach einem der Ansprüche 11 bis 13, **dadurch gekennzeichnet, daß** als durch Transfer reagierendes Beendigungs-Agens verwendet wird:
- die Polyhalomethane der Formel CHₐX_{b}Y_{c}, wobei X und Y Cl⁻, Br⁻, F⁻ oder I⁻ darstellen und wobei a von O bis 2 und b und c von 0 bis 4 variieren;
- die Disulfide der Formel (R-S)₂ wie (C₂H₅-S)₂, (C₆H₅-CH₂-S)₂, (C₆H₅-CO-S)₂;
- Tetraphenylethylen oder eines seiner substituierten Derivate wie (CH₃)₃Si-O-C(C₆H₅)₂-C(C₆H₅)₂-O-Si(CH₃)₃;
- Azobisisobutyronitril (AIBN) oder eines seiner Derivate der Formel: 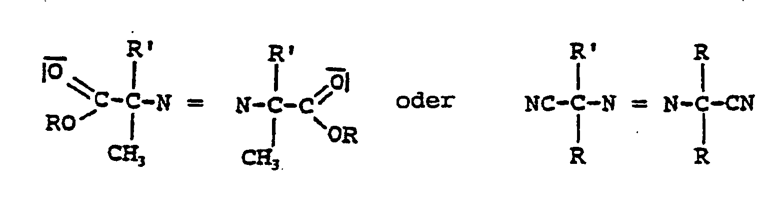 worin R und R', welche miteinander identisch oder voneinander verschieden sind, Kohlenwasserstoffketten von C₁ bis C₆ sind;
- ein Peroxid vom Typ 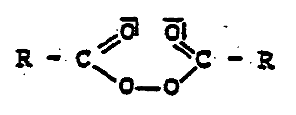
- ein Merkaptan, wie beispielsweise CH₃-CH₂-CH₂-SH, CH₃-COCH₂-SH, CH₃-O-CO-CH₂-CH₂-SH

15. Verfahren nach einem der Ansprüche 10 bis 14, **dadurch gekennzeichnet, daß** ein Beendigungs-Agens verwendet wird, dessen Konzentration zwischen 10⁻⁶ M und 1M liegt.

16. Verfahren nach einem der Ansprüche 1 bis 15, **dadurch gekennzeichnet, daß** dem vorstehend genannten Gemisch als Stoff, der sich mit dem Polymer assoziieren kann, ein Dotierungsmittel hinzugefügt wird, welches sich in den vorstehend genannten Film während der Polymerisation inkorporiert.

17. Verfahren nach einem der Ansprüche 1 bis 16, **dadurch gekennzeichnet, daß** ein Träger-Elektrolyt verwendet wird, der in dem gewählten Lösungsmittel löslich ist und eine Leitfähigkeit aufweist, welche gleich groß ist wie oder größer ist als 10⁻⁵Ω⁻¹cm⁻¹.

18. Verfahren nach einem der Ansprüche 1 bis 17, **dadurch gekennzeichnet, daß** ein Träger-Elektrolyt in Konzentrationen verwendet wird, die zwischen 10⁻³ und 5M, vorzugsweise zwischen 5 •10⁻²M und 5 • 10⁻¹M, liegen.

19. Verfahren nach einem der Ansprüche 1 bis 18, **dadurch gekennzeichnet, daß** der Träger-Elektrolyt ein Perchlorat, ein Tosylat, ein Tetrafluoroborat, ein Hexafluorophosphat und/oder ein quaternäres Ammoniumhalogenid der Formel: 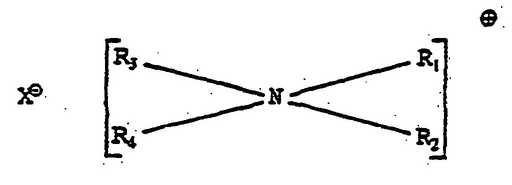 in welcher X⁻ ClO₄⁻, BF₄⁻, PF₆⁻, OTos⁻, Cl⁻, Br⁻ darstellt und in welcher die Radikale R₁, R₂, R₃ und R₄, die miteinander identisch oder voneinander verschieden sind, Wasserstoff, Alkylradikale von C₁ bis C₆ oder Aryle sind, umfaßt.

20. Verfahren nach einem der Ansprüche 1 bis 19, **dadurch gekennzeichnet, daß** als Lösungsmittel aprotische organische Lösungsmittel, insbesondere Hexamethylphosphorotriamid, Dimethylsulfoxid, Dimethylformamid, Acetonitril und/oder Methylenchlorid, verwendet werden.

## Claims

1. Process for depositing by electropolymerization an organic film on an electrically conducting surface, in which use is made of a mixture comprising (a) at least one monomer able to form a polymer, preferably a non-conductive polymer, on this surface, (b) at least one material able to combine with the said polymer, (c) a support-electrolyte and (d) a solvent, optionally an aprotic solvent, this mixture being subjected to an electrolysis using as cathode the conducting surface to be coated at a potential lying within the region corresponding to electron transfer between the conducting surface and the monomer with a value equal to, or more negative than, that corresponding to the peak of inhibition of the cathode reaction of the monomer, but less negative than the reaction of the solvent or of the support-electrolyte, this process being **characterized in that** the material (b) able to combine with the polymer comprises a comonomer and/or a terminating agent capable of chemically reacting with growing polymer chains formed from the monomer.

2. Process according to Claim 1, **characterized in that** a comonomer able to copolymerize with the monomer on the surface to be coated is used as the aforementioned reactive substance.

3. Process according to Claim 1 or 2, **characterized in that** the monomer used is of the unsaturated and/or cyclic type.

4. Process according to any one of Claims 1 to 3, **characterized in that** the monomer used has an inhibition peak on a voltammogram obtained with a low potential scan rate of between 2 and 20 mV per second.

5. Process according to Claim 3, **characterized in that** the monomer used comprises acrylonitrile, acrolein and/or acrylamide.

6. Process according to any one of Claims 1 to 5, **characterized in that** a monomer with concentrations of between 10⁻³M and 10M is used in the aforementioned mixture.

7. Process according to Claim 6, **characterized in that** the concentration of the monomer in the aforementioned mixture is between 5 × 10⁻²M and 2M when the monomer is different from the solvent.

8. Process according to any one of Claims 2 to 7, **characterized in that** the comonomer is a vinyl or cyclic monomer, such as a vinyl halide or vinylidene halide, an acrylate, a methacrylate, a vinyl ester, a vinyl ether, an aromatic vinyl, a conjugated diene or a lactone.

9. Process according to Claim 8, **characterized in that** the concentration of the comonomer is between 5 x 10⁻³M and 5M, provided that the solvent is not a monomer/comonomer combination.

10. Process according to any one of Claims 1 to 9, **characterized in that** the material able to combine with the said polymer comprises a terminating agent capable of stopping the process of the monomer polymerizing on the aforementioned surface.

11. Process according to Claim 10, **characterized in that** a terminating agent is used which reacts either by coupling, such as 2,2-diphenyl-1-picrylhydrazyl, or by transfer, such as mercaptans or halogenated derivatives, or by interaction, such as captodative monomers, which after reaction with the active species are incapable of continuing the polymerization because of the appearance of an excessively stabilized radical.

12. Process according to Claim 11, **characterized in that** the terminating agent reacting by interaction has the general formula: 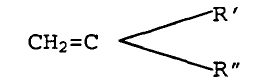 in which R' is an electron-withdrawing group such as -C≡N, -CO-R or -CO-OR, and R' ' is an electron-donating group, such as for example -OR, -NR₂ -SR, -O-CO-R, -O-SiR₃ or -O-PO-(OR)₃, R being aryl or C₁ to C₆ alkyl radicals.

13. Process according to either of Claims 11 and 12, **characterized in that** the aforementioned stabilized radical is formed by 1,3-bis-diphenylene-2-phenylallyl or 2,2-di(4-*tert*-octylphenyl)-1-picrylhydrazyl.

14. Process according to any one of Claims 11 to 13, **characterized in that**:
- polyhalomethanes of formula CHₐX_{b}Y_{c}, where X and Y represent Cl⁻, Br⁻, F⁻ or I⁻ and in which A varies from 0 to 2 and b and c vary from 0 to 4;
- disulphides of formula (R-S)₂, such as (C₂H₅-S)₂, (C₆H₅-CH₂-S)₂, (C₆H₅-CO-S)₂;
- tetraphenylethylene or one of its substituted derivatives, such as (CH₃)₃Si-O-C(C₆H₅)₂-C(C₆H₅)₂-O-Si(CH₃)₃;
- azobisisobutyronitrile (AIBN) or one of its derivatives of formula: 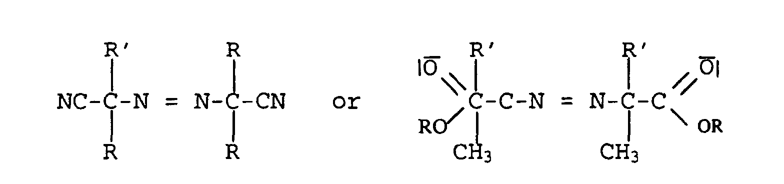 in which R and R', which are identical or different, are C₁ to C₆ hydrocarbon chains;
- a peroxide of type 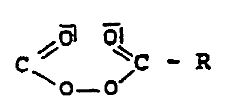
- a mercaptan, such as for example CH₃-CH₂-CH₂-SH, CH₃-COCH₂-SH or CH₃-O-CO-CH₂-CH₂-SH; are used as terminating agent reacting by transfer.

15. Process according to any one of Claims 10 to 14, **characterized in that** a terminating agent whose concentration is between 10⁻⁶M and 1M is used.

16. Process according to any one of Claims 1 to 15, **characterized in that** added to the aforementioned mixture, as material able to combine with the said polymer, is a doping agent which is incorporated into the aforementioned film during the polymerization.

17. Process according to any one of Claims 1 to 16, **characterized in that** a support-electrolyte soluble in the chosen solvent and having a conductivity equal to or greater than 10⁻⁵ Ω⁻¹cm⁻¹ is used.

18. Process according to any one of Claims 1 to 17,
**characterized in that** a support-electrolyte is used in concentrations lying between 10⁻³ M and 5M, preferably between 5 × 10⁻²M and 5 × 10⁻¹M.

19. Process according to any one of Claims 1 to 18, **characterized in that** the support-electrolyte comprises a perchlorate, a tosylate, a tetrafluoroborate, a hexafluorophosphate and/or a quaternary ammonium halide of formula: 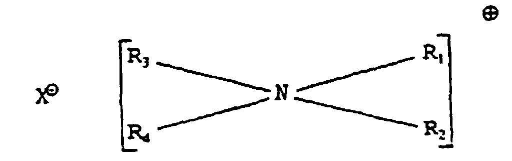 in which X⁻ represents ClO₄⁻, BF₄⁻, PF₆⁻, OTos⁻, Cl⁻ or Br⁻ and in which the radicals R₁, R₂, R₃ and R₄, which are identical or different, are hydrogens or aryl or C₁ to C₆ alkyl radicals.

20. Process according to any one of Claims 1 to 19, **characterized in that** organic aprotic solvents, especially hexamethylphosphorotriamide, dimethylsulphoxide, dimethylformamide, acetronitrile and/or methylene chloride, are used as solvent.
